# DEMANDE DE BREVET EUROPEEN

(11) **EP 1 876 425 A2**
(43) Date de publication de la demande: **09.01.2008**
(21) Numéro de dépôt: 07110655.3
(22) Date de dépôt: 20.06.2007
(51) Int. Cl.: G01D 7/00, G01C 23/00

(54) **Instrument de secours pour tableau de bord d'un aéronef à maintenance fiable**

(30) Priorité: 04.07.2006 FR 0606063
(71) Demandeur: THALES, 92200 Neuilly sur Seine (FR)
(72) Inventeur: Chesne, Philippe, 41100, VENDOME (FR); Surer, Charles, 77230, ARNAGE (FR)
(74) Mandataire: Lucas, Laurent Jacques

(57) **Abrégé**

La présente invention concerne un instrument de secours pour tableau de bord, équipant des aéronefs.

L'instrument de secours comportant des moyens pour calculer et afficher des informations de vol à partir de données fournies par des équipements intégrés dans un système de secours, caractérisé en ce qu'il comporte des moyens de calcul d'une représentation des équipements et de leurs liaisons et des moyens d'affichage de cette représentation (51 - 58), les moyens de calcul de la représentation indiquant une indisponibilité (50) des données fournies par un équipement (53).

L'invention s'applique notamment pour réduire les durées de dépannages ou les détections de fausses pannes sur des instruments de secours intégrés sur le tableau de bord d'un aéronef. Plus généralement, elle s'applique pour faciliter et fiabiliser la maintenance d'un tel instrument de secours.

## Description

La présente invention concerne un instrument de secours pour tableau de bord, équipant des aéronefs. Elle s'applique notamment pour réduire les durées de dépannages ou les détections de fausses pannes sur des instruments de secours intégrés sur le tableau de bord d'un aéronef. Plus généralement, elle s'applique pour faciliter et fiabiliser la maintenance d'un tel instrument de secours.

Classiquement, un tableau de bord d'un avion de ligne est équipé d'écrans de visualisations primaires et d'un ou plusieurs instruments de secours. Les écrans de visualisation primaire sont doublés, un groupe étant destiné au pilote et l'autre groupe étant destiné au copilote. Chaque groupe comporte généralement un écran présentant les informations de vitesse, d'altitude et d'attitude de l'avion et un écran présentant les informations de navigation.
Les instruments de secours sont notamment utilisés, mais pas exclusivement, en cas de panne des écrans de visualisation primaires. A cet effet, un instrument de secours présente des informations essentielles pour le pilotage de l'avion, en particulier la vitesse, l'altitude et l'attitude de l'avion.
Antérieurement, les altimètres utilisés pour donner ces informations étaient des instruments mécaniques. Ces derniers ont été remplacés par des instruments électroniques, ce qui a notamment permis de réaliser des gains de poids, de taille et de fiabilité. Une plus grande souplesse d'utilisation est par ailleurs obtenue puisqu'il est possible d'ajouter d'autres informations. En particulier, certains instruments de secours combinent, outre des informations d'altitude, de vitesse et d'attitude, des informations de navigation.
Un instrument de secours doit aussi être relativement autonome et décorrélé des autres instruments de bord. A cet effet, il intègre par exemple des capteurs permettant de générer les informations qu'il fournit. Ainsi, il comporte par exemple un capteur de pression statique et un capteur de pression totale permettant notamment de définir l'altitude et la vitesse de l'avion. Il peut aussi comporter une centrale inertielle, plusieurs capteurs de température et d'autres types de capteurs. L'écran de visualisation de l'instrument de secours peut être en technologie LCD.

En plus des informations générées directement dans l'instrument de secours, ce dernier peut recevoir des informations provenant de capteurs d'autres systèmes équipant l'avion. Ces informations transitent notamment par le bus série de l'avion, connu sous le terme ARINC. Ces données peuvent par exemple indiquer le cap de l'avion et sont donc affichées sur l'écran de l'instrument de secours.
L'instrument de secours peut aussi envoyer des informations vers l'extérieur, notamment vers le pilote automatique. En effet, puisqu'il génère lui-même certaines des informations qu'il affiche, il peut fournir ces informations à d'autres systèmes intégrés dans l'avion. En particulier, le pilote automatique a besoin d'informations fiables. A titre d'exemple, un avion comporte au moins deux centrales inertielles. Cependant, elles peuvent tomber en panne ou délivrer des informations fausses. Dans ce cas, l'instrument de secours peut pallier la centrale défaillante et / ou indiquer laquelle des deux centrales fournit l'information juste. Pour un pilote automatique, il est donc particulièrement important d'avoir au moins trois informations pour un même paramètre.
Par construction, différents instruments peuvent être reliés entre eux mais il y a toujours une ségrégation entre les écrans de visualisation primaires et les instruments de secours.

Le nombre croissant d'informations affichées par un instrument de secours et l'interopérabilité croissante de ce dernier avec d'autres systèmes de l'avion peuvent rendre ce type d'instrument de plus en plus complexe. Bien qu'un instrument de secours équipant un avion soit d'une très grande fiabilité, il peut néanmoins tomber en panne. En cas de panne, les techniciens chargés de la maintenance remplacent l'instrument de secours défaillant par un autre instrument de secours.
Un problème se pose cependant au niveau du diagnostic des pannes. Lorsqu'une panne apparaît sur un instrument de secours, elle peut avoir au moins deux origines. Une première origine est intérieure à l'instrument lui-même. C'est par exemple le cas lorsque la panne provient d'un capteur interne ou d'un calculateur interne. L'autre origine est extérieure à l'instrument de secours. Dans le cas où l'origine de la panne est interne à l'instrument, celui-ci doit bien évidemment être changé. En revanche, dans le cas où la panne est externe, il n'y a pas lieu de le remplacer. Cependant, en raison de la complexité croissante des instruments, les techniciens chargés de la maintenance ont de plus en plus de difficultés à cerner l'origine des pannes et remplacent systématiquement l'instrument de secours dans tous les cas de pannes, par manque de connaissance de l'instrument ou tout simplement par manque de temps. Il en résulte au moins deux inconvénients. Un premier inconvénient est un nombre de retours excessifs en usine d'instruments de secours pour cause de panne. Un autre inconvénient est l'augmentation du temps de détection des pannes, puisque l'instrument de secours est systématiquement remplacé avant de rechercher une panne externe.

Un but de l'invention est notamment de pallier les inconvénients précités. A cet effet, l'invention a pour objet un instrument de secours équipant le tableau de bord d'un aéronef comportant des moyens pour calculer et afficher des informations de vol à partir de données fournies par des équipements intégrés dans un système de secours, ledit instrument comportant des moyens de calcul d'une représentation des équipements et de leurs liaisons et des moyens d'affichage de cette représentation. Les moyens de calcul de la représentation indiquent une indisponibilité des données fournies par un équipement.
Avantageusement, les équipements peuvent être représentés par des blocs, un bloc représentant ledit instrument.
Une indisponibilité des données fournies par un équipement est par exemple indiquée par une coupure de la représentation de la liaison vers l'équipement.
Une indisponibilité des données fournies par un équipement est par exemple indiquée au niveau du bloc représentant cet équipement.
Les informations de vols peuvent inclure l'altitude, la vitesse et l'attitude de l'aéronef. Ces informations de vol peuvent être fournies au moins par les équipements suivants :
- un capteur de pression totale
- un capteur de pression statique
Dans un mode de réalisation possible, ces équipements sont intégrés dans ledit instrument.

L'instrument de secours reçoit par exemple des données d'équipements externes via un bus.
Avantageusement, les moyens d'affichage commandent par exemple l'affichage de la représentation sur une page graphique supplémentaire.

L'invention a pour principaux avantages qu'elle permet une très grande rapidité de diagnostic des pannes, qu'elle diminue le risque de démontages d'instruments de secours et qu'elle est simple à mettre en oeuvre.

D'autres caractéristiques et avantages de l'invention apparaîtront à l'aide de la description qui suit faite en regard de dessins annexés qui représentent :
- la figure 1, un tableau de bord d'un aéronef, notamment d'un avion de ligne, équipé d'un instrument de secours ;
- la figure 2, un exemple d'informations affichées par l'instrument de secours précité;
- la figure 3, un exemple d'affichage en cas de détection de panne au niveau de cet instrument de secours ;
- la figure 4, par un synoptique un exemple de réalisation d'instrument de secours selon l'invention intégré dans un système de secours ;
- la figure 5, un exemple de représentation de l'architecture du système de secours dans un instrument selon l'invention.

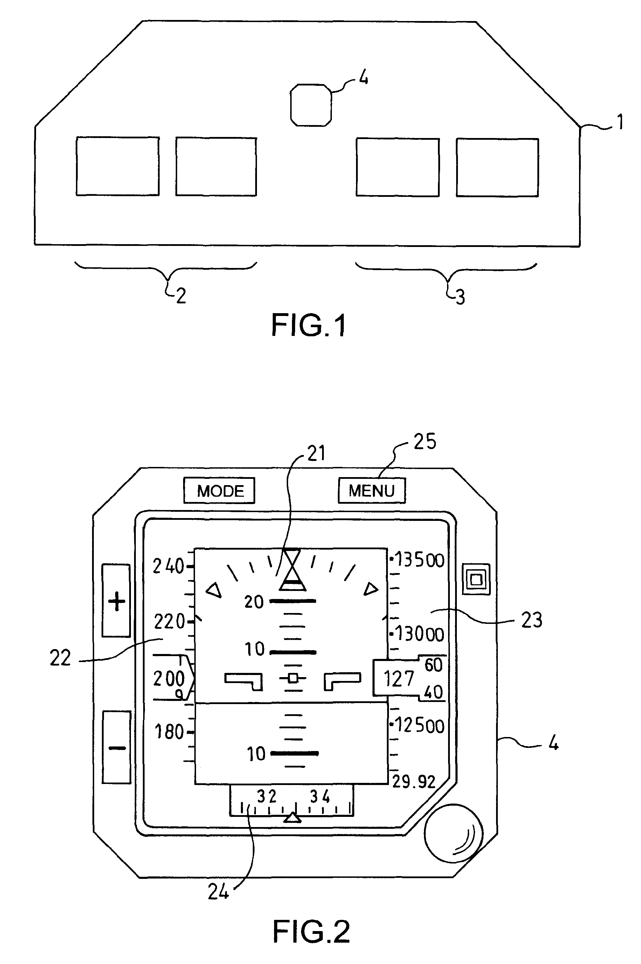

La figure 1 présente de façon schématique un tableau de bord 1 d'un avion de ligne. Il comporte deux groupes d'écrans de visualisation 2, 3. Chaque groupe comprend un écran présentant notamment des informations d'altitude, de vitesse et d'attitude et un écran présentant des informations de navigation. Les deux groupes 2, 3 sont identiques, l'un étant réservé au pilote et l'autre au copilote. Ces deux groupes forment les écrans de visualisation primaire. Un instrument de secours 4 est placé entre ces deux groupes de visualisation primaire. Eventuellement, il est possible de prévoir plusieurs instruments de secours. L'instrument de secours de la figure 1 présente au moins des informations d'altitude, de vitesse et d'attitude de l'avion.
Un instrument de secours 4, du type électronique, tel que présenté dans la figure 1 équipe donc des avions de lignes. Il intègre d'une part des capteurs de pression afin d'afficher les informations essentielles. Il peut comporter par ailleurs des capteurs inertiels afin de fournir des informations de navigation et peut recevoir d'autre part par le bus ARINC des informations de l'extérieur envoyées par d'autres instruments de bord, comme décrit précédemment.
Lorsque l'instrument de secours 4 détecte un problème interne, en particulier sur l'un de ses capteurs ou sur l'un de ses organes internes, ou un problème externe, un problème de connexion ou de bus ARINC par exemple, un « flag » est affiché sur l'écran de l'instrument 4 et noté par les pilotes. La complexité de ce système autonome fait que les techniciens chargés de la maintenance n'arrivent pas toujours à détecter l'origine de la panne et donc démontent systématiquement l'instrument 4 qui affiche le problème même si la source du problème est externe à l'instrument.

La figure 2 illustre à titre d'exemple l'écran d'affichage de l'instrument de secours 4. Une première zone 21 de l'écran présente l'attitude de l'avion symbolisée par ses ailes par rapport à la ligne d'horizon 211. Une deuxième zone 22 affiche la vitesse de l'avion et une troisième zone 23 affiche l'altitude de l'avion. En plus de ces trois informations essentielles, d'autres informations peuvent être présentées sur une même page. Dans l'exemple de la figure 2, une zone 24 est réservée aux informations de cap. En appuyant sur un bouton spécifique 25, une autre page peut-être affichée pour présenter par exemple des informations de navigation ou d'autres informations. En cas de défaut d'affichage des écrans de visualisation primaire 2, 3, l'écran de l'instrument de secours 4 est utilisé par les pilotes. En phase de vol, les pilotes observent néanmoins l'écran de l'instrument de secours et notent les problèmes éventuels.

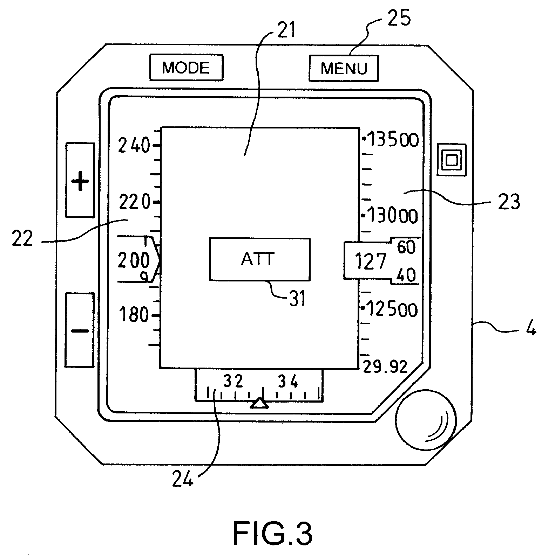

La figure 3 illustre un cas où il y a un problème au niveau de la détection de l'attitude de l'avion. Dans ce cas, la première zone 21 n'affiche plus une illustration et des paramètres symbolisant l'attitude mais un signal de panne 31 ou « flag ». Dans l'exemple de la figure 3, le mot « ATT » est affiché, de façon très explicite et bien en vue, pour indiquer aux pilotes que l'information d'attitude est indisponible sur l'instrument de secours. Lorsqu'un problème de disponibilité de l'information se situe dans une autre zone, son affichage opérationnel tel qu'illustré par la figure 2, est alors remplacé par un signal du type de la figure 3 par exemple. En cas de problème d'accès à l'information de vitesse la zone correspondante 22 affiche alors par exemple le mot « SPD ». En cas de problème d'accès à l'information d'altitude la zone correspondante affiche par exemple le mot « ALT », toujours bien en évidence. Les pilotes notent donc ces pannes en vol, éventuellement ces problèmes peuvent par ailleurs être notés automatiquement dans un journal électronique. Dans tous les cas, un compte rendu de la panne est disponible à l'atterrissage en vue d'être exploité par les techniciens chargés de la maintenance. Comme indiqué précédemment, les techniciens n'arrivent pas toujours à déceler l'origine de la panne, interne ou externe à l'instrument de secours.
La difficulté à déceler l'origine d'une panne peut aussi être due à l'architecture de l'avion. Ainsi pour certaines architectures, il est quasi certain qu'une indisponibilité de l'information de vitesse, d'attitude ou d'altitude est interne à l'instrument de secours car les capteurs et les moyens de traitement des informations sont tous internes à l'instrument de secours, l'information étant alors générée dans l'instrument. En revanche pour d'autres architectures d'avion, l'origine de la panne est plus délicate à trouver. En effet pour ces architectures, les capteurs peuvent être placés à l'extérieur de l'instrument de secours. C'est le cas notamment lorsqu'il existe préalablement deux systèmes de capteurs à bord de l'avion. Le constructeur de l'avion peut alors exiger que l'instrument de secours utilise un des deux systèmes. Dans ce cas, une indisponibilité des informations d'altitude, de vitesse ou d'attitude par exemple, peut être d'origine interne à l'instrument de secours mais aussi d'origine externe. De toutes façons, quelle que soit l'architecture de l'avion, l'instrument de secours peut utiliser des informations d'origine externe, entraînant une difficulté pour détecter l'origine de pannes.
Une solution connue consiste à enregistrer des codes de pannes qui permettent d'indiquer après analyse l'origine des pannes. Malheureusement, ces codes de pannes sont nombreux et pas suffisamment explicites sans manuel de correspondance. Enfin ces codes nécessitent de connaître le système de manière à les analyser et ainsi identifier l'origine du problème.

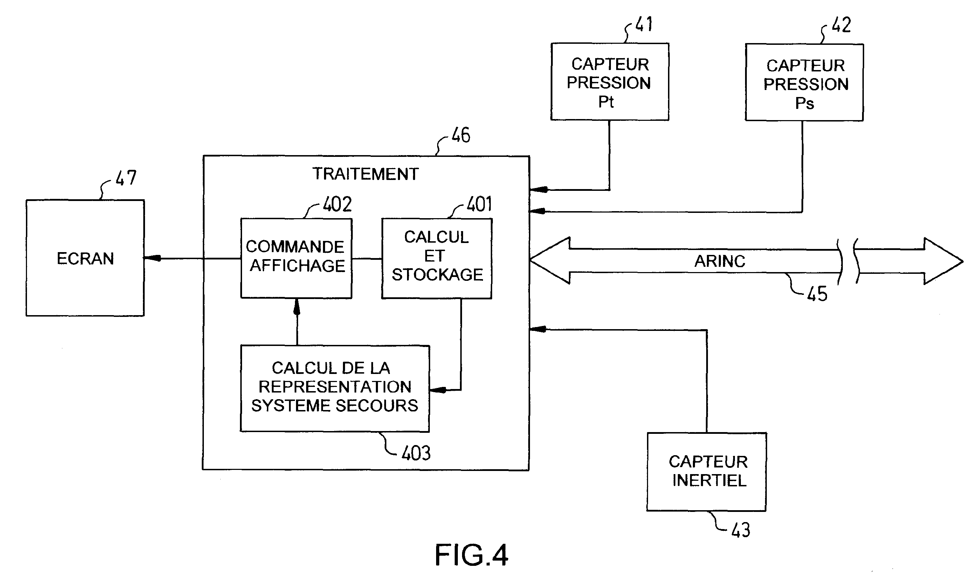

La figure 4 illustre par une représentation synoptique un instrument de secours selon l'invention. Cet instrument s'intègre dans un système de secours, les composants du système étant ou non intégrés dans l'instrument de secours. Le système de secours comporte notamment au moins un capteur de pression totale 41 et un capteur de pression statique 42 pour permettre de générer des informations d'altitude et de vitesse et d'attitude de l'avion, essentielles au vol. Par ailleurs, le système de secours peut comporter d'autres composants, par exemple un capteur inertiel 43 pour fournir des informations d'attitude de l'avion. Ces différents capteurs 41, 42, 43 peuvent être situés à l'intérieur ou à l'extérieur de l'instrument de secours. Ce dernier peut aussi recevoir des informations, notamment des informations de navigation, fournies par d'autres systèmes via un bus 45, en particulier le bus avion ARINC.
Les informations fournies par ces capteurs ou ce bus arrivent à des moyens de traitements 46 internes à l'instrument de secours. Ces moyens de traitement exploitent les informations issues des différents capteurs ou systèmes externes. Ils peuvent aussi générer des informations pour transmission vers l'extérieur, par exemple via le bus ARINC, à destination notamment du pilote automatique. Une fonction première reste cependant d'afficher sur l'écran 47 de l'instrument de secours les informations de vol, ces informations étant notamment l'altitude, la vitesse et l'attitude de l'avion mais aussi d'autres informations. Les informations de vols ne sont pas disponibles directement à partir des capteurs 41, 42, 43. Elles doivent être calculées par les moyens de traitement en fonction des mesures effectuées par les capteurs, mais aussi en fonction de paramètres d'initialisation éventuels entrés par exemple par les pilotes. A cet effet, les moyens de traitement comportent un module 401 de calcul et de stockage des informations de vol. Eventuellement, des informations préalablement calculées et directement exploitables peuvent être fournies par le bus 45. Dans tous les cas, les informations calculées sont fournies à un module 402 de commande de l'affichage de l'écran 47.
Un instrument de secours selon l'invention comporte par ailleurs un module 403 qui calcule une représentation du système de secours. Cette représentation est fournie au module de commande 402 de l'affichage écran. Ainsi, un instrument de secours selon l'invention présente, par exemple sur une page graphique supplémentaire, un synoptique de l'architecture du système de secours avec les différentes liaisons ainsi que les composants ou équipements 41, 42, 43, 45 qui y sont connectés.
Les moyens de traitement 46, en particulier au niveau du module de calcul des informations 401 sont capables de déterminer l'origine d'une panne, en particulier par une absence de données provenant directement d'un équipement 41, 42, 43 ou transitant normalement par le bus 45. En cas, de panne le module de calcul des informations 401 peut donc indiquer au module 403 de calcul de la représentation du système de secours l'origine d'une panne. Les moyens de calcul 403 de la représentation du système de secours peuvent donc par ailleurs indiquer l'équipement ou la liaison à l'origine de cette panne et le mettre en évidence sur la représentation affichée à l'écran 47.

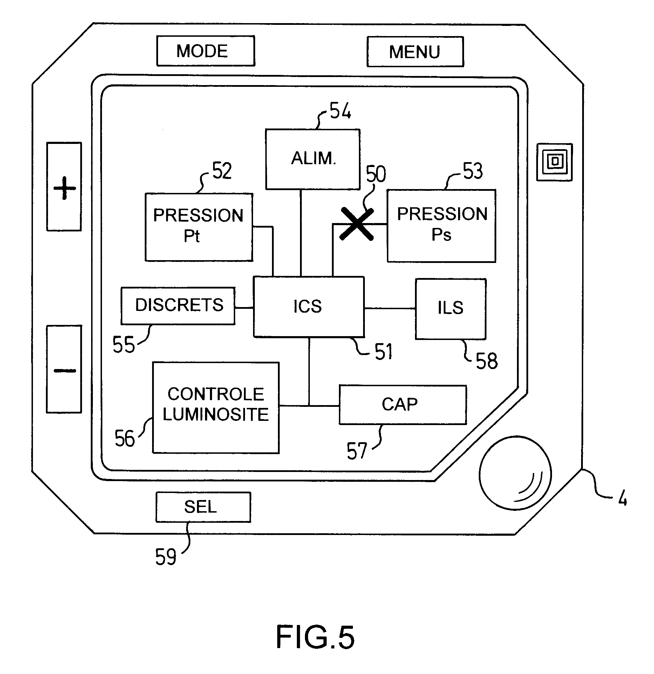

La figure 5 illustre un exemple de représentation d'une architecture du système de secours affichée sur l'écran 47 d'un instrument de secours 4 selon l'invention. L'écran présente plusieurs blocs susceptibles d'être à l'origine d'une panne. Le découpage en bloc est réalisé au niveau du module 403 de calcul de la représentation de l'architecture du système de secours. Cette représentation est avantageusement orientée pour indiquer le plus rapidement possible l'origine d'une panne. Dans l'exemple de la figure 5, la représentation calculée par l'instrument de secours regroupe donc plusieurs équipements ou ensembles d'équipements représentés par des blocs à l'affichage. Ainsi un premier bloc 51 représente l'ensemble de l'instrument de secours à l'exception des composants ou équipements représentés par ailleurs. Un deuxième bloc 52 représente le capteur de pression total 41, un troisième bloc 53 représente le capteur de pression statique 42, un quatrième bloc 54 représente l'alimentation électrique, un cinquième bloc 55 représente les connexions arrières de l'instrument, un sixième bloc 56 représente le module de contrôle de luminosité de l'écran 47, un septième bloc 57 représente les moyens fournissant l'information de cap et un huitième bloc 58 représente l'instrument fournissant les informations d'aide à l'atterrissage, ILS selon l'expression anglo-saxonne « Instrument Landing System ».

Par ailleurs, le module de calcul de la représentation de l'architecture du système de secours définit les liaisons entre les différents blocs. Ces liaisons relient les blocs au premier bloc 51 représentant l'instrument de secours.
Les blocs représentent des composants internes ou externes à l'instrument de secours. Avantageusement, les blocs autres que le premier bloc 51 représentent par exemple tous des composants extérieurs à l'instrument de secours. Dans l'exemple de la figure 5, le capteur de pression statique représenté par le troisième bloc 53 est indiqué comme étant en panne, par exemple par un changement de couleur et / ou par une croix 50 barrant sa liaison au premier bloc 51 représentant l'instrument de secours. La croix représente une coupure de la liaison signifiant l'indisponibilité des données fournies par le capteur de pression. Dans ce cas, un technicien de maintenance peut immédiatement reconnaître qu'il s'agit d'une panne extérieure à l'instrument de secours, le capteur de pression statique 42, 53 étant extérieur à l'instrument de secours dans l'architecture avion. Le technicien n'aura donc pas à démonter l'instrument de secours inutilement.
Si une panne intérieure à l'instrument de secours est détectée, en particulier au niveau d'un composant interne, le module 403 de la représentation de l'architecture système affiche par exemple sur l'écran le premier bloc 51, représentant l'instrument de secours, barré d'une croix et/ou un changement de couleur de ce bloc 51. Un technicien de maintenance sait alors qu'il faut démonter l'instrument de secours pour le remplacer par un autre.
L'exemple de représentation de la figure 5 peut être conservé même si les capteurs de pression totale 41 et statique 42 sont intégrés dans l'instrument de secours.
Le module de calcul de la représentation de l'architecture du système conserve en mémoire l'état du système de secours jusqu'à l'atterrissage. Un technicien chargé de la maintenance accède à la page graphique supplémentaire affichant cette architecture par exemple en appuyant sur un bouton de sélection 59.
Le module 401 de calcul et de stockage des informations, le module 402 de commande de l'affichage et le module 403 de calcul de la représentation du système de secours sont par exemple inclus dans un même processeur équipé des mémoires et interfaces adaptées.

Un instrument de secours selon l'invention permet donc d'obtenir une très grande rapidité de diagnostic, l'organe défaillant étant directement identifié. Il ne nécessite pas l'analyse de codes de pannes complexes. Il permet une diminution du risque de démontages d'instruments de secours qui ne sont pas en panne. Enfin, l'invention est simple à réaliser. En particulier elle peut s'adapter sur des instruments déjà existants car ne nécessitant pas de modification matérielle notable.

## Revendications

1. Instrument de secours équipant le tableau de bord d'un aéronef, comportant des moyens pour calculer et afficher des informations de vol à partir de données fournies par des équipements (4, 41, 42, 43, 45) intégrés dans un système de secours, **caractérisé en ce qu'**il comporte des moyens (403) de calcul d'une représentation des équipements et de leurs liaisons et des moyens d'affichage (402, 47) de cette représentation, les moyens (403) de calcul de la représentation indiquant une indisponibilité des données fournies par un équipement, les équipements étant représentés par des blocs (51 - 58), un bloc (51) représentant ledit instrument (4).

2. Instrument selon la revendication 1, **caractérisé en ce qu'**une indisponibilité des données fournies par un équipement (53) est indiquée par une coupure de la représentation de la liaison (50) vers l'équipement.

3. Instrument selon l'une quelconque des revendications précédentes, **caractérisé en ce qu'**une indisponibilité des données fournies par un équipement (4) est indiquée au niveau du bloc (51) représentant cet équipement.

4. Instrument de secours selon l'une quelconque des revendications précédentes, **caractérisé en ce que** les informations de vols comprennent l'altitude (23), la vitesse (22) et l'attitude (21) de l'aéronef.

5. Instrument de secours selon la revendication 4, **caractérisé en ce que** les informations de vol sont fournies au moins par les équipements suivants :
- un capteur de pression totale (41)
- un capteur de pression statique (42)

6. Instrument de secours selon la revendication 5, **caractérisé en ce que** les équipements (41, 42) sont intégrés dans ledit instrument (4).

7. Instrument de secours selon l'une quelconque des revendications précédentes, **caractérisé en ce qu'**il reçoit des données d'équipements externes via un bus (45).

8. Instrument de secours selon l'une quelconque des revendications précédentes, **caractérisé en ce que** les moyens d'affichage (402, 47) commandent l'affichage de la représentation sur une page graphique supplémentaire.
